(19) Europäisches Patentamt / European Patent Office / Office européen des brevets

(11) **EP 2 870 719 B1**

(12) **EUROPEAN PATENT SPECIFICATION**

(45) Date of publication and mention
of the grant of the patent:
**13.06.2018 Bulletin 2018/24**

(21) Application number: **12743792.9**

(22) Date of filing: **06.07.2012**

(51) Int Cl.:
*H04L 5/00* (2006.01)　　*H04B 7/0413* (2017.01)
*H04W 52/14* (2009.01)　*H04W 52/24* (2009.01)
*H04W 72/12* (2009.01)

(86) International application number:
**PCT/SE2012/050795**

(87) International publication number:
**WO 2014/007707 (09.01.2014 Gazette 2014/02)**

(54) **METHOD AND NODE FOR MULTIPLE USER MIMO SCHEDULING**

VERFAHREN UND KNOTEN ZUR MIMO-PLANUNG FÜR MEHRERE BENUTZER

PROCÉDÉ ET NOEUD POUR UN ORDONNANCEMENT MIMO MULTIUTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.05.2015 Bulletin 2015/20**

(73) Proprietor: **Telefonaktiebolaget LM Ericsson
(publ)
164 83 Stockholm (SE)**

(72) Inventors:
• **FAN, Rui**
  **Beijing 100102 (CN)**
• **LIU, Jinhua**
  **Beijing 100102 (CN)**
• **LI, Chan**
  **Beijing 100102 (CN)**

(74) Representative: **Brann AB**
**P.O. Box 3690**
**Drottninggatan 27**
**103 59 Stockholm (SE)**

(56) References cited:
**EP-A2- 2 288 049**　　**WO-A1-2011/055137**
**WO-A1-2011/112132**　**CN-A- 102 340 336**
**US-A1- 2011 306 384**

Description

## TECHNICAL FIELD

The disclosure relates to Multiple User (MU) Multiple-Input-Multiple-Output (MIMO) scheduling, and more specifically to a method and an RBS for MU-MIMO scheduling.

## BACKGROUND

3GPP Long Term Evolution (LTE) is the fourth-generation mobile communication technologies standard developed within the 3rd Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an UTRAN and an E-UTRAN, a User Equipment (UE) is wirelessly connected to a Radio Base Station (RBS) commonly referred to as a NodeB (NB) in UMTS, and as an evolved NodeB (eNodeB or eNB) in LTE. An RBS is a general term for a radio network node capable of transmitting radio signals to a UE and receiving signals transmitted by a UE.

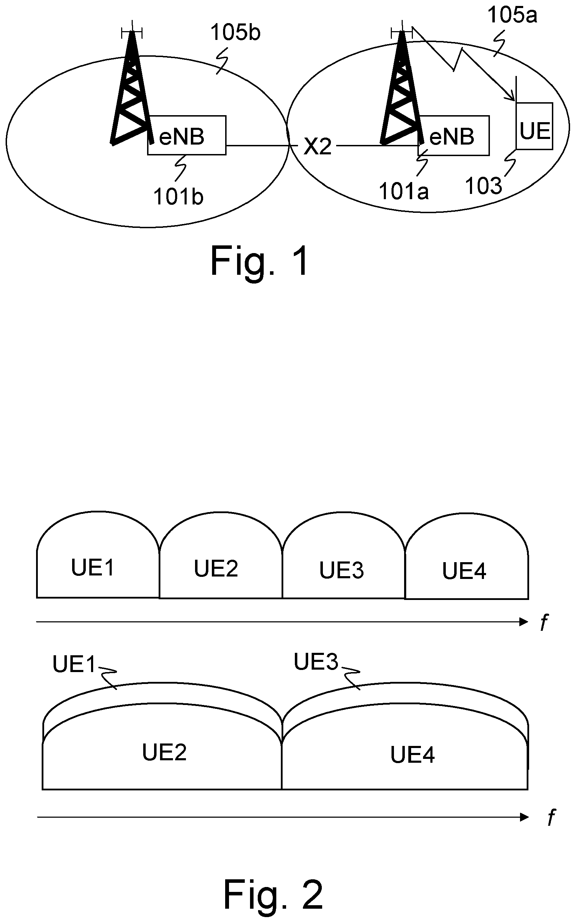

**Figure 1** illustrates a radio access network in an LTE system. An eNB 101a serves a UE 103 located within the RBS's geographical area of service or the cell 105a. The eNB 101a is directly connected to the core network. The eNB 101a is also connected via an X2 interface to a neighboring eNB 101b serving another cell 105b. Although the eNBs of this example network serves one cell each, an eNB may serve more than one cell.

Release 8 of LTE supports uplink MU-MIMO, which implies uplink transmissions from multiple UEs using the same uplink time-frequency resource and relying on the availability of multiple receive antennas at the RBS to separate the two or more transmissions. The difference between ordinary Frequency Division Multiplexing (FDM) scheduling and MU-MIMO scheduling is schematically illustrated in **Figure 2.** In the upper part of **Figure 2,** all UEs (UE1, UE2, UE3, UE4) are allocated different resource blocks in frequency, also referred to as FDM scheduling. In the lower part of **Figure 2,** MU-MIMO scheduling is illustrated, where UE1 and UE2 are co-scheduled on the same resources in frequency, and UE3 and UE4 are co-scheduled on the same resources.

One important benefit of uplink MU-MIMO is that it can get a similar gain in system throughput as Single User (SU)-MIMO where spatial multiplexing is used, without the need for multiple transmission antennas at the UE side. MU-MIMO thus allows for a less complex UE implementation. The potential system gain of uplink MU-MIMO relies on more than one UE being available for transmission using the same time-frequency resource. The process of pairing UEs that should share the same time-frequency resources is non-trivial and requires suitable radio-channel conditions.

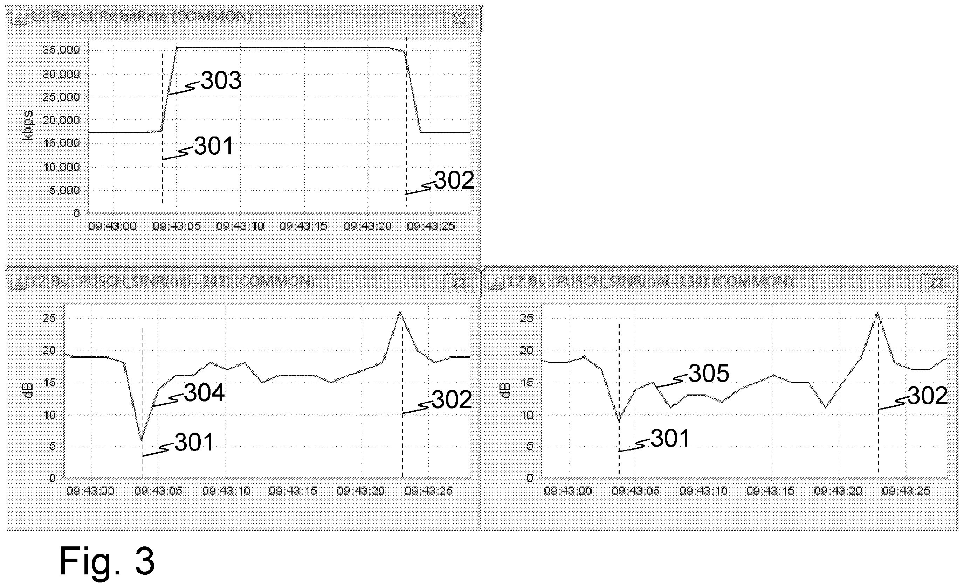

Ideally, UEs that are paired, i.e., the UE group size is two, should have orthogonal or almost orthogonal channels, so that they cause as little interference as possible to each other. If the two signals can be perfectly separated at the receiver, and both signals are transmitted with the same power as in the single UE case, there is a potential for a 100% cell or UE throughput gain without power increase. However, the radio channel of the paired UEs are seldom ideally orthogonal to each other, which means that the signal of one paired UE may contribute with a relatively large interference to the other one. Thus the interference that one UE experiences after being paired with another UE using MU-MIMO scheduling may be increased quite much compared to if the UEs are not paired, and thus are not MU-MIMO scheduled. Similarly, the interference that one UE experiences after being scheduled in normal FDM may be decreased quite much compared to when the UE is scheduled in pair with another UE. Therefore, MU-MIMO scheduling may cause an abrupt Signal to Interference and Noise Ratio (SINR) variation, which is illustrated in the three graphs in **Figure 3.** The upper left graph, 303, illustrates the uplink bit rate in kilobits per second (kbps) over time for a first UE. The lower left graph, 304, illustrates the SINR for the Physical Uplink Shared Channel (PUSCH) in dB over time for the first UE with a Radio Network Temporary Identifier (RNTI) equal to 242, and the right hand graph, 305, illustrates the SINR for the PUSCH in dB over time for a second UE with a Radio Network Temporary Identifier (RNTI) equal to 134. When the first and the second UE switch from non-MU-MIMO scheduling to MU-MIMO scheduling in pair with each other, which happens at a time indicated by the broken line 301 in all three graphs, the uplink bit rate of the cell increases from around 18000 kbps to around 36000 kbps while the first and the second UEs' SINR are abruptly decreased. This means that the two UEs' transmission power should be increased accordingly to meet the SINR or SINR target requirement. Analogously, the UEs' SINR increase abruptly when the first and second UEs switch from MU-MIMO scheduling in pair to a de-paired non-MU-MIMO scheduling, which happens at a time indicated by the broken line 302 in all three graphs. At de-pairing, the UEs' transmission power should be decreased accordingly in order to generate less interference and to decrease the power consumption by this UE.

The specified power control step size for uplink transmission power control is given by [-1, 0, 1, 3] dB, meaning that the maximum step size is minus 1 dB when the power is to be decreased, and plus 3 dB when the power is to be increased for a UE. In each Round Trip Time (RTT), which corresponds to approximately 5 milliseconds (ms), the power may thus at the most be increased by 3dB or decreased by 1 dB using transmission power control commands. However, the difference between MU-MIMO and non-MU-MIMO SINR in the switch instant is quite large as exemplified with the field test results shown in the graphs of **Figure 3.** Therefore it will take quite some time for the power control to follow the abrupt SINR variation. As may be seen in the graphs of **Figure 3,** the SINR variation may be up to 15 dB. With a step size of +3dB, it would take 5 RTT or 25 ms to adapt the power to the SINR change. Such an abrupt interference or SINR variation may also happen when the scheduler in the RBS changes the partner of one paired UE, e.g. due to changes of radio channel orthogonality between different UEs.

There are currently three different scheduling schemes with different complexity applied for MU-MIMO scheduling:

1. Static scheduling, i.e. the UEs are randomly divided into pairs of two UEs. The pairs persist as long as all UEs remain active.

2. Island scheduling, i.e. UEs are paired with each other only if both of them have a larger estimated throughput compared to non-MU-MIMO scheduling. The estimated throughput is based on an estimated SINR which takes the interference from the other paired UE into account.

3. Proportional Fair in Time and Frequency (PFTF) scheduling, i.e. UEs are paired with each other on resource blocks in which they may have the largest throughput. The scheduling thus considers frequency selectivity in addition to the considerations in scheduling scheme 2 above.

The drawback of scheduling scheme 1 is that the interference between MU-MIMO UEs is not considered when deciding to pair the UEs. The UEs could be paired with each other using MU-MIMO scheduling, even when the decision results in a cell or UE throughput loss compared to non-MU-MIMO scheduling.

The drawback of scheme 2 and 3 is that a UE will experience abrupt interference and SINR variation quite often, as UEs frequently get paired or de-paired or changes their MU-MIMO pair partner. Since power control and/or SINR measurements cannot follow this abrupt SINR quickly enough, the link adaptation may be seriously affected. The link adaptation deterioration may finally result in both UE and cell performance degradation.

The international patent application publication WO 2011/055137 A1, which was cited in the International Search Report describes a method and apparatus for co-scheduling transmissions in a wireless network. This document relates to a method and apparatus for determining whether two user equipments in a wireless network can be co-scheduled by an uplink scheduler. The method includes the determination of orthogonality factors for each pair of equipments to be considered and, from the orthogonality factors, selecting UEs to be co-scheduled.

## SUMMARY

It is therefore an object to address some of the problems outlined above, and to provide a solution for an improved scheduling procedure to address the frequent and abrupt SINR variations occurring when performing MU-MIMO scheduling. This object and others are achieved by the method and the RBS according to the independent claims, and by the embodiments according to the dependent claims.

According to a first aspect of embodiments, a method in a radio base station of a wireless network for MU-MIMO scheduling is provided. The method comprises estimating a throughput gain of a paired scheduling relative to an unpaired scheduling for a UE pair comprising a first UE and a second UE, and for each of the first UE and the second UE individually. The method also comprises when the first UE and the second UE are initially unpaired, scheduling the first UE in pair with the second UE when the estimated throughput gain for the UE pair is above a first threshold, and when the estimated throughput gain is positive for each of the first UE and second UE. The method further comprises when the first UE is initially paired with the second UE, scheduling the first UE de-paired from the second UE when the estimated throughput gain for the UE pair is lower than a second threshold, or when the estimated throughput gain is negative for either the first or the second UE. The method further comprises when the first UE is initially paired with the second UE, estimating a further throughput gain of a paired scheduling for a UE pair comprising the first UE and a third UE relative to the UE pair comprising the first UE and the second UE. The method further comprises when the first UE is initially paired with the second UE, scheduling the first UE in pair with the third UE when the further throughput gain is higher than a third threshold.

According to a second aspect of embodiments, an RBS of a wireless network is provided. The RBS is configured for MU-MIMO scheduling. The RBS comprises a processing circuit configured to estimate a throughput gain of a paired scheduling relative to an unpaired scheduling for a User Equipment, UE, pair comprising a first UE and a second UE, and for each of the first UE and the second UE individually. The processing circuit is further configured to schedule the first UE in pair with the second UE when the estimated throughput gain for the UE pair is above a first threshold, and when the estimated throughput gain is positive for each of the first UE and the second UE. The processing circuit is further configured to schedule the first UE de-paired from the second UE when the estimated throughput gain for the UE pair is lower than a second threshold, or when the estimated throughput gain is negative for either the first UE or the second UE. The processing circuit is further configured to estimate a further throughput gain for a paired scheduling for a UE pair comprising the first UE and a third UE relative to the UE pair comprising the first UE and the second UE. The processing circuit is further configured to schedule the first UE in pair with the third UE when the further throughput gain is higher than a third threshold.

An advantage of embodiments is a reduction of the frequency of abrupt SINR or interference variations due to MU-MIMO scheduling, thanks to a more cautious scheduling procedure. Interference problems due to MU-MIMO scheduling are

thus minimized.

Other objects, advantages and features of embodiments will be explained in the following detailed description when considered in conjunction with the accompanying drawings and claims. The invention is solely defined by the appended claims. In the following, references to embodiments not falling within the scope of the claims are to be understood as examples useful for understanding the invention.

## 5 BRIEF DESCRIPTION OF THE DRAWINGS

**Figure 1** is a schematic illustration of a radio access network in LTE.

**Figure 2** is a schematic illustration of MU-MIMO scheduling.

**Figure 3** shows three graphs illustrating bit rate and SINR variations at MU-MIMO scheduling according to a field test result.

**Figures 4a-4c** are flowcharts illustrating the method in an RBS according to embodiments.

**Figure 5** is a block diagram schematically illustrating an RBS according to embodiments.

## DETAILED DESCRIPTION

In the following, different aspects will be described in more detail with references to certain embodiments of the invention and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while embodiments of the invention are primarily described in the form of methods and nodes, they may also be embodied in a computer program product as well as in a system comprising a computer processor and a memory coupled to the processor, wherein the memory is encoded with one or more programs that may perform the functions disclosed herein.

Embodiments are described in a non-limiting general context in relation to an example scenario with MU-MIMO in an LTE network with up to two UEs scheduled simultaneously. However, it should be noted that embodiments may also be applied when more than two UEs are co-scheduled, i.e., scheduled over the same time-frequency resources. Embodiments may also be applied to any radio access network technology similar to an E-UTRAN implementing MU-MIMO scheduling, such as Code Division Multiple Access (CDMA) 2000, WIMAX, Wideband CDMA (WCDMA), and Time Division (TD) CDMA.

The problem of frequently occurring MU-MIMO scheduling changes is addressed by a solution where the UE pairing and de-pairing scheduling scheme is more cautious than conventionally, meaning that the criterion for when e.g. a MU-MIMO scheduling is triggered is adapted to reduce the amount of scheduling changes. The advantage of reducing the frequency of MU-MIMO scheduling changes is that the problem induced by the SINR or interference variations due to the scheduling changes is minimized.

Furthermore, embodiments of the present invention relates to two complementary procedures to address the problem of the SINR variance in case of MU-MIMO scheduling:

1. Adapted power control: In embodiments of the invention, the power control is optimized for paired and de-paired scheduling so that the UE transmit power can follow the SINR or interference variation more quickly. A fast adjustment of the UE transmission power makes it possible to avoid or at least reduce the extra interference generated in a neighbor cell at a MU-MIMO scheduling.

2. Improved MU-MIMO link adaptation: In embodiments of the invention, the SINR due when a UE is paired or de-paired is predicted based on an estimated interference change, and the link adaptation is based on the predicted SINR. In this way a more suitable transport format may be selected for use during the initial phase of the new MU-MIMO scheduling.

The improved MU-MIMO scheduling solution briefly described above and more thoroughly described hereinafter may be combined with either the adapted power control described under 1 above, or with the improved MU-MIMO link adaptation described under 2 above, or with both of them. The adapted power control and the improved link adaptation procedure are also more thoroughly described below.

Improved MU-MIMO scheduling

As mentioned above, abrupt interference or SINR variation occurs when a UE switches between paired scheduling and non-paired scheduling, or switches to another pair partner during paired scheduling. Therefore the UE pairing and de-pairing in MU-MIMO scheduling should be done more cautiously to avoid frequent SINR variations. The criterions for cautious MU-MIMO scheduling are:

1. One UE can only be scheduled in pair with another UE when the estimated throughput gain of the two UEs scheduled in pair relative to the two UEs scheduled unpaired is higher than a certain threshold called ThresA, and when both UEs individually get a positive throughput gain by being paired. ThresA may in one exemplary embodiment be the x-th percentile, e.g. the 50th percentile.

2. Two paired UEs can only be de-paired when the estimated throughput gain of the two UEs scheduled in pair relative to the two UEs scheduled unpaired is lower than another threshold called ThresB, or when one of the paired UEs can get a higher throughput when not paired. ThresB may in an exemplary embodiment be the y-th percentile, e.g. the 20-th percentile.

3. Paired UEs can only change pair partner when the estimated throughput gain of the new pair relative to the original pair is higher than certain pre-determined threshold called ThresC. ThresC may in an exemplary embodiment be the z-th percentile, e.g. the 20-th percentile. As an example, a UE *a* - paired with a UE *b* - may only change pair partner to UE *c* if the estimated throughput gain of the pair UE *a* + UE *c* is higher than that of the UE pair UE *a* + UE *b*.

The throughput may be estimated based on an uplink channel and the uplink power headroom of the UEs. The thresholds ThresA, ThresB, and ThresC may be tuned based on either simulations or field tests.

Furthermore, to avoid triggering a UE pairing, de-pairing, or pair partner change at an instant radio channel peak or dip, an attack-decay filter may be applied to the calculated throughput gain given by the following equation:

$$gainThp(n) = gainThp_{inst} \cdot \alpha + gainThp(n-1) \cdot (1-\alpha) \qquad [1]$$

$gainThp(n)$ is the filtered throughput gain in the present Transmission Time Interval (TTI); $gainThp_{inst}$ is the estimated throughput gain in the present TTI; $\alpha$ is the filter coefficient which may take a value from 0 to 1 and which should be tuned; $gainThp(n-1)$ is the filtered throughput gain in the previous TTI.

The procedure for the improved MU-MIMO scheduling may thus comprise a first step where the system estimates the throughput gain of a paired scheduling relative to a de-paired scheduling for each possible UE pair or for the UE pair that is being scheduled, as well as for the individual UEs of the pairs. The procedure also comprises a second step where the RBS pairs, de-pairs, or changes pair partners according to the criterions mentioned above under bullets 1, 2 and 3.

An advantage of these scheduling procedure embodiments is that the impact due to the abrupt SINR variation is well considered during the MU-MIMO scheduling. Unnecessary MU-MIMO scheduling actions such as pairing, de-pairing, pair partner changes are thus avoided. As a consequence, the frequency of the abrupt SINR variation is reduced, which in turn alleviates the burden on the link adaptation.

Adapted MU-MIMO power control

As already briefly mentioned in the background section, the conventional power adjustment range of each power control step is given by the step size configuration [-1,0,1, 3] dB. However, the difference between expected SINR and true SINR is quite large at a point in time when the UE is scheduled from paired to de-paired or the opposite. It may take several RTTs to reach the SINR target or the required SINR. The problem is more severe when the UE switches from scheduled in pair to scheduled alone, as it takes longer time to decrease than to increase the UE transmission power since the maximum step for decreasing is only minus 1dB. Excessively high transmission power during the switch from paired scheduling to de-paired scheduling results in a high interference to neighbor cells. It would therefore be advantageous to provide a faster UE transmission power adjustment to reach a reasonable power level in shorter time, as that minimizes the interference generated in neighbor cells.

According to prior art, the UE transmission power is calculated according to the following equation:

$$UE\_TX\_power = P_0 + \alpha * PL_{DL} + \Delta_{MCS} + 10 * \log_{10}(M) + f(\Delta_{TPC}) \qquad [2]$$

*UE_TX_power* is the adjusted UE transmission power, $P_0$ is the desired or target received power per resource block at eNodeB, $\Delta_{MCS}$ is the modulation and coding scheme used for current PUSCH transmission, *M* is the number of resource blocks used for current PUSCH transmission, $f(\Delta_{TPC})$ is an accumulated Transmission Power Control (TPC) command sent from the eNodeB to the UE, $PL_{DL}$ is a downlink path loss between the eNodeB and the UE, and $\alpha$ is a path loss compensation factor.

In embodiments, a special power adaptation parameter is used for adapting the power control equation [2] to a MU-MIMO scheduling case, such that the power may be adjusted to the abrupt SINR changes immediately. The following three alternative embodiments A, B, and C of the power control method are provided:

A. In a first step, a special power adaptation parameter for uplink transmission power control, such as the special power offset in the first embodiment described hereinafter, or the special power step size in the second embodiment described hereinafter, are transmitted to a UE e.g. using Radio Resource Control (RRC) signaling. In a second step, the eNodeB indicates to the UE that the UE is going to be paired or de-paired with another UE. This indication may be sent to the UE in a MAC CE or in a Physical Downlink Control Channel (PDCCH). In a third step, the UE adjusts its power control using the special power adaptation parameter.

B. In this embodiment, the eNodeB and the UE are configured to use a pre-defined power adaptation parameter, which means that the first step described in embodiment A is not needed in this embodiment. Embodiment B thus comprises the second and the third steps described in embodiment A, of the UE receiving an indication from the eNodeB and adjusting the power control accordingly.

C. In this embodiment, the step of the eNodeB sending a special power adaptation parameter is performed when the eNodeB plans to pair or de-pair the UE. The transmission of the special power adaptation parameter also serves as the indication for adjusting the power control. Once the UE receives the special power adaptation parameter e.g. in RRC signaling, the UE will apply the special power adaptation parameter directly for adjusting the power control. The transmission of the special power adaptation parameter thus serves both as the indication to apply the special power control adapted for MU-MIMO pairing or de-pairing, and as the value of the power adaptation parameter to use for the special power control.

In a first embodiment of the present invention, the special power adaptation parameter comprises new power offsets. The new power offsets are introduced in addition to the normal power control, to compensate for the sudden interference change. These new power offsets can be introduced in Equation [2] to calculate the UE transmission power when transmitting the first subframe after the users are scheduled paired or de-paired, according to the following:

$$UE\_TX\_power = \begin{cases} P_0 + \alpha * PL_{DL} + \Delta_{MCS} + 10 * \log_{10}(M) + f(\Delta_{TPC} + \Delta_{Pair}) & paired \\ P_0 + \alpha * PL_{DL} + \Delta_{MCS} + 10 * \log_{10}(M) + f(\Delta_{TPC} - \Delta_{Depair}) & depaired \end{cases} \qquad [3]$$

$\Delta_{Pair}$, $\Delta_{Depair}$ may e.g. be defined as new information in the existing Information Element (IE) *UplinkPowerControlDedicated.* The information in the IE may thus be used to compensate for special power requirements valid during a change of scheduling from MU-MIMO pairing to de-pairing or vice versa. The new power offsets may be conveyed to the UE in dedicated RRC signaling, in accordance with embodiment A described above. The new power offsets may alternatively be pre-defined, in accordance with embodiment B described above.

The scheduler in the RBS thus notifies the UE to calculate the transmission power using the lower part of equation [3], when one UE is to be scheduled from paired to de-paired. This may e.g. be done by indicating to the UE that it is to be scheduled from paired to de-paired in a Media Access Control (MAC) Control Element (CE). The UE will then know what power offset to use in equation [3] when it calculates the transmission power. In this way, the interference caused by this UE to neighbor cells is reduced immediately, and the SINR may approximately meet the SINR target immediately as well.

Analogously, when one UE is to be scheduled from de-paired to paired, the scheduler notifies the UE to calculate the total transmit power using the upper part of equation [3]. In this way, the UE can quickly increase its power and meet the abruptly changed SINR requirement at once.

The UE may apply Equation [3] to calculate the transmission power at the specific subframe corresponding to the MAC CE with the indication from the eNodeB. If there is a remaining mismatch between the resulting SINR and the SINR target, the mismatch may be easily compensated by the normal power control procedure.

In a second embodiment, the special power adaptation parameter comprises a new step size configuration. A large step size may be pre-defined or configured to handle the large SINR variation due to MU-MIMO pairing or de-pairing, and a small step size may be pre-defined or configured for a stable situation without MU-MIMO scheduling changes. In one example embodiment, a step size table given by [-y,-x, x, y] dB is used, where x is configured or pre-defined to be between 0.5 and 1, to allow for adjustments to the small SINR changes, while y can be configured or pre-defined to be between 3 and 5 to allow for adjustments to the large SINR changes occurring at MU-MIMO scheduling changes. The TPC command may be sent to the UE at a number D of subframes in advance of the subframe when the de-pairing or pairing action occurs, where D is the TPC delay. This allows for an even faster adjustment of the power so that the impact of the SINR variation is minimized.

Such a new step size configuration may be either broadcasted in an uplink MU-MIMO capable system for all UEs, or it may be sent to some dedicated UEs that have a high possibility to be scheduled in MU-MIMO mode via RRC signaling or other commands or orders.

Improved MU-MIMO link adaptation

When a scheduler in an RBS intends to switch UEs from paired to de-paired scheduling or vice versa, or to change a pair partner of a UE during MU-MIMO scheduling, the resulting SINR variation cannot be captured quickly enough by the current measurement module due to measurement delays and filtering of the SINR measurement. More specifically, the reported SINR from Layer 1 (L1) at time t that the link adaptation is based on cannot reflect the actual SINR that a UE experienced at time t+K, where K is typically equal to or larger than 4 ms. This is due to the delay counted from the time instant when an uplink grant is sent, to the time instant when the UE actually transmits. This may result in either a too aggressive transport format selection when switching from de-paired to paired scheduling, or in a too conservative transport format selection when switching from paired to de-paired scheduling.

Therefore, in embodiments of the invention, the link adaptation is performed based on a predicted SINR instead of the SINR measured by L1 at the time of the scheduling action. The SINR is predicted in different ways depending on if the interference change is caused by a UE pairing, de-pairing, or pair partner change. The method to predict the SINR may be different for different receivers. A simple method to estimate the SINR of a UE when it is going to be paired with another UE, when an MRC receiver is used, may be exemplified with the following equation:

$$SINR_{UEi} = \frac{P_{rx,UEi}}{\gamma P_{rx,UEi} + \beta P_{rx,UEj} + I_{other}} \qquad [4]$$

where $UE_j$ is paired with $UE_j$, $\gamma$ (0-1) is the coefficient of self-interference, $\beta$ (0-1) is the coefficient of the interference from the paired UE, and $I_{other}$ comprises the thermal noise and the interference from other UEs that are not scheduled in pair with $UE_i$. Furthermore, $P_{rx,UEi}$ and $P_{rx,UEj}$ are the received power for $UE_i$ and $UE_j$ respectively. $\gamma$ and $\beta$ may either be dynamically calculated according to the radio conditions, or they may correspond to well tuned pre-determined values.

Once the L1 SINR measurement is accurate enough, the traditional link adaption may be used.

One example embodiment of this new link adaptation procedure is given hereinafter. In the following, SINR is used as a short version of PUSCH SINR:

1. At time instance t1, the scheduler wants to pair UE a and UE b which have not been working in paired mode previously. At this time instance the SINR of each of the UEs is $SINR_{a\_meas}$ and $SINR_{b\_meas}$ respectively.

2. Instead of using $SINR_{a-meas}$ and $SINR_{b\_meas}$ for link adaptation, the scheduler predicts a SINR for each UE as paired. Assuming that $SINR_{a\_pred}$ and $SINR_{b-pred}$ are the predicted SINR values for the two UEs, $SINR_{a-pred}$ and $SINR_{b-pred}$ are used for the link adaptation instead of the measured SINR values. The SINR values may be predicted for the newly paired UEs and used in the corresponding link adaption until the first measured SINRs corresponding to the paired transmission for the two UEs are available.

3. At time t2, the first measured SINRs corresponding to the paired transmission of user a and b are available. The measured SINRs are set as filtered SINRs for UE a and UE *b* respectively, and these measured SINRs are used for the link adaptation. After t2, the filtered SINRs are used directly in the link adaptation for the two paired UEs respectively.

4. At time instance t3, the scheduler decides to de-pair UE *a* and UE *b*, and the current measured SINRs for the two UEs are $SINR_{a\_meas-3}$ and $SINR_{b\_meas\_3}$ respectively.

5. Instead of using $SINR_{a\_meas\_3}$ and $SINR_{b\_meas\_3}$ for link adaptation, the scheduler predicts the SINR for each UE as de-paired. If $SINR_{a\_pred\_3}$ and $SINR_{b\_pred\_3}$ are the predicted de-paired SINRs for the two UEs, $SINR_{a\_pred\_3}$ and $SINR_{b-pred-3}$ are used for the link adaptation. The predicted SINRs for the de-paired transmission of the two UEs are used in link adaptation until the first measured SINR corresponding to the de-paired transmission of the two UEs is available, and the corresponding SINR filters of the two UEs are reset accordingly.

Embodiments of method and node

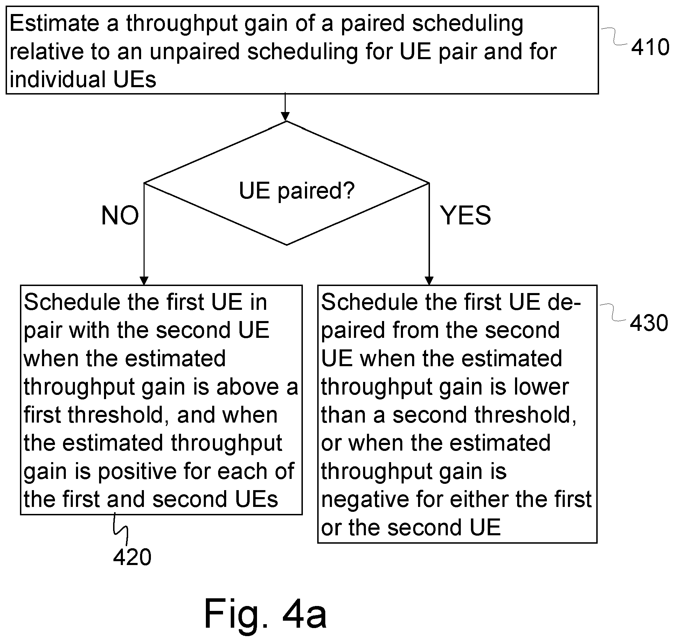

**Figure 4a** is a flowchart illustrating an embodiment of a method in a RBS of a wireless network, for MU-MIMO scheduling. The method comprises:

- 410: Estimating a throughput gain of a paired scheduling relative to an unpaired scheduling for a UE pair comprising a first UE and a second UE, and for each of the first and the second UEs individually. The method may further comprise applying an attack-decay filter when estimating the throughput gain, in order to avoid triggering a scheduling change due to instant radio channel peaks or dips.

When the first UE and the second UE are initially unpaired, the method comprises:

- 420: Scheduling the first UE in pair with the second UE when the estimated throughput gain for the UE pair is above a first threshold, and when the estimated throughput gain is positive for each of the first and second UEs. The first threshold is referred to as ThresA in the description above, and may in one exemplary embodiment be the 50th percentile.

When the first UE is initially paired with the second UE, the method comprises:

- 430: Scheduling the first UE de-paired from the second UE when the estimated throughput gain for the UE pair is lower than a second threshold, or when the estimated throughput gain is negative for either the first or the second UE. The second threshold is referred to as ThresB in the description above, and may in one exemplary embodiment be the 20th percentile.

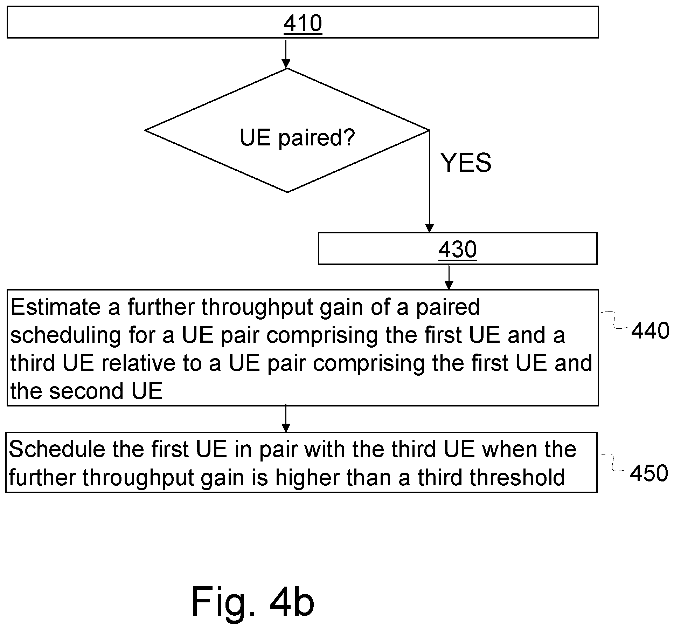

**Figure 4b** is a flowchart illustrating another embodiment of the method in the RBS. When the first UE is initially paired with the second UE, the method may further comprise in addition to steps 410 and 430 described above with reference to **Figure 4a:**

- 440: Estimating a further throughput gain for a paired scheduling for a UE pair comprising the first UE and a third UE relative to a UE pair comprising the first UE and the second UE.

- 450: Scheduling the first UE in pair with the third UE when the further throughput gain is higher than a third threshold. The third threshold is referred to as ThresC in the description above, and may in one exemplary embodiment be the 20th percentile.

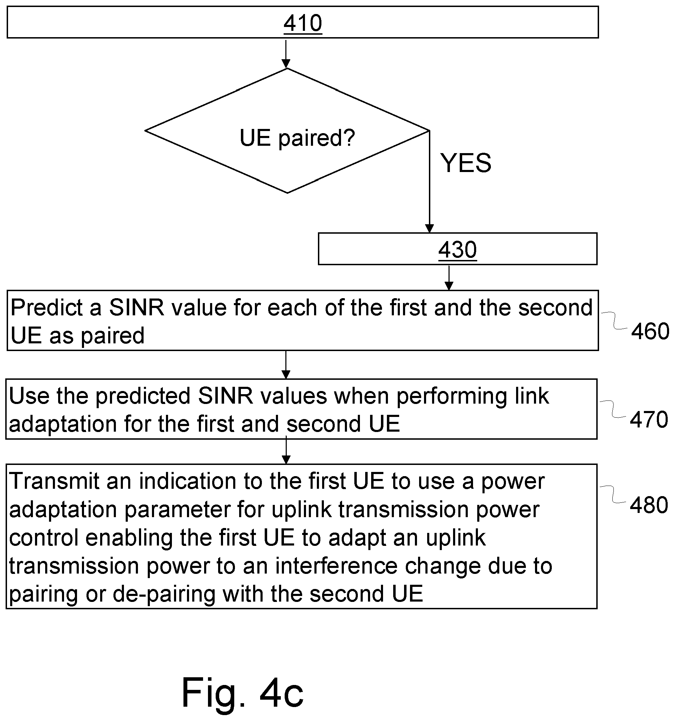

The improved scheduling procedure described above may also be combined with the improved link adaptation procedure, as illustrated in the flowchart of **Figure 4c.** In one embodiment, the method further comprises, when scheduling the first UE in pair with the second UE, or alternatively with the third UE (not illustrated):

- 460: Predicting a signal to noise and interference value for each of the first and the second or third UE as paired.
- 470: Using the predicted signal to noise and interference values when performing link adaptation for the first, and second or third UE.

In another embodiment, the method further comprises, when scheduling the first UE de-paired from the second UE:

- Predicting a signal to noise and interference value for each of the first and the second or third UE as de-paired.

- Using the predicted signal to noise and interference values when performing link adaptation for the first and second UE.

The adapted power control procedure described above may also be combined with any of the above described embodiment, as illustrated in the flowchart in **Figure 4c.** The method in the RBS may thus further comprise in addition to steps 410, 430, 460, and 470:

- 480: Transmitting an indication to the first UE to use a power adaptation parameter for uplink transmission power control. The power adaptation parameter enables the first UE to adapt an uplink transmission power to an interference change due to pairing or de-pairing with the second UE.

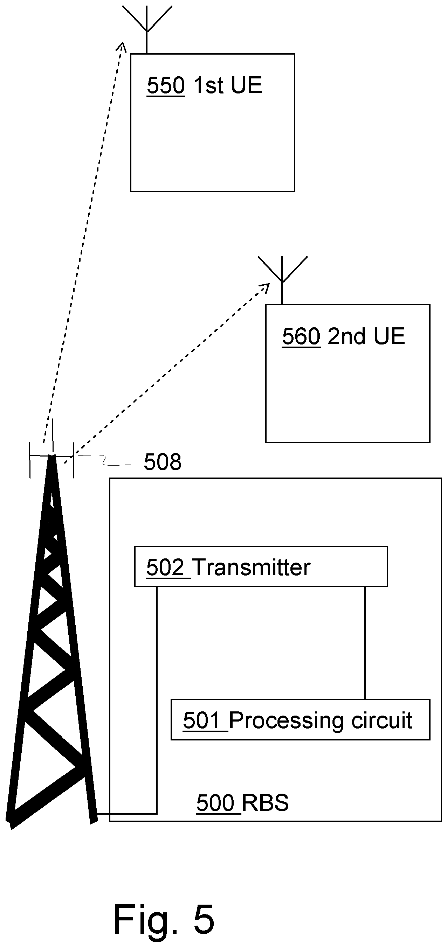

In accordance with embodiment A described above in the section "Adapted MU-MIMO power control", the method further comprises transmitting the power adaptation parameter to the first UE before transmitting the indication.
In accordance with embodiment C described above in the section "Adapted MU-MIMO power control", transmitting the indication in 480 comprises transmitting the power adaptation parameter to the first UE. The transmission of the special power adaptation parameter thus serves both as the indication to apply the special power control, and as the value of the power adaptation parameter to use for the special power control.
According to the first embodiment described in the section "Adapted MU-MIMO power control", the power adaptation parameter comprises a positive power step size for uplink transmission power control when the first UE is scheduled in pair with the second UE, and a negative power step size for uplink transmission power control when the first UE is scheduled de-paired from the second UE. According to the second embodiment described in the section "Adapted MU-MIMO power control", the power adaptation parameter comprises a first transmission power offset for uplink transmission power control when the first UE is scheduled in pair with the second UE, and a second transmission power offset for uplink transmission power control when the first UE is scheduled de-paired from the second UE.
An embodiment of an RBS 500 is schematically illustrated in the block diagram in **Figure 5.** The RBS 500 is configured for MU-MIMO scheduling. The RBS 500 comprises a processing circuit 501 configured to estimate a throughput gain of a paired scheduling relative to an unpaired scheduling for a UE pair comprising a first UE 550 and a second UE 560, as well as for each of the first and the second UEs individually. The processing circuit 501 is also configured to schedule the first UE in pair with the second UE, when the estimated throughput gain for the UE pair is above a first threshold, also referred to as ThreshA, and when the estimated throughput gain is positive for each of the first and second UEs. The processing circuit 501 is further configured to schedule the first UE de-paired from the second UE when the estimated throughput gain for the UE pair is lower than a second threshold, also referred to as ThreshB, or when the estimated throughput gain is negative for either the first or the second UE. In order to avoid triggering a scheduling change due to instant radio channel peaks or dips, the processing circuit 501 may be further configured to apply an attack-decay filter when estimating the throughput gain.
In one embodiment, the processing circuit is configured to estimate a further throughput gain of a paired scheduling for a UE pair comprising the first UE and a third UE relative to a UE pair comprising the first UE and the second UE. The processing circuit is in this embodiment also configured to schedule the first UE in pair with the third UE when the further throughput gain is higher than a third threshold, also referred to as ThreshC.
When adding the improved link adaptation, the processing circuit 501 may be configured to predict a SINR value for each of the first and the second or third UE as paired, when they are initially de-paired, or de-paired, when they are initially paired. The processing circuit 501 may then also be configured to use the predicted SINR values when performing link adaptation for the first, and second or third UE.
When adding the adapted power control, the RBS may further comprise a transmitter 502 configured to transmit an indication to the first UE to use a power adaptation parameter for uplink transmission power control. The power adaptation parameter enables the first UE to adapt an uplink transmission power to an interference change due to pairing or de-pairing with the second UE. The transmitter 502 may be connected to one or more transmitting antennas 508. The transmitter 502 may be further configured to transmit the power adaptation parameter to the first UE before transmitting the indication, in accordance with embodiment A described above in the section "Adapted MU-MIMO power control".

The transmitter 502 may be further configured to transmit the indication by transmitting the power adaptation parameter to the first UE, in accordance with embodiment C described above in the section "Adapted MU-MIMO power control".

According to the first embodiment described in the section "Adapted MU-MIMO power control", the power adaptation parameter comprises a positive power step size for uplink transmission power control when the first UE is scheduled in pair with the second UE, and a negative power step size for uplink transmission power control when the first UE is scheduled de-paired from the second UE. According to the second embodiment described in the section "Adapted MU-MIMO power control", the power adaptation parameter comprises a first transmission power offset for uplink transmission power control when the first UE is scheduled in pair with the second UE, and a second transmission power offset for uplink transmission power control when the first UE is scheduled de-paired from the second UE.

The processing circuit and the transmitter described above with reference to **Figure 5** may be logical units, separate physical units or a combination of both logical and physical units.

In an alternative way to describe the embodiments in **Figure 5,** the RBS 500 comprises a Central Processing Unit (CPU) which may be a single unit or a plurality of units. Furthermore, the RBS 500 comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the RBS 500 causes the CPU to perform steps of the procedures described earlier in conjunction with **Figures 4a-c.** In other words, when said code means are run on the CPU, they correspond to the processing circuit 501 of **Figure 5.**

The above mentioned and described embodiments are only given as examples and should not be limiting. Other solutions, uses, objectives, and functions within the scope of the accompanying claims may be possible.

**Claims**

1. A method in a radio base station (500) of a wireless network, for Multiple User Multiple-Input-Multiple-Output scheduling, the method comprising:

   - estimating (410) a throughput gain of a paired scheduling relative to an unpaired scheduling for a User Equipment, UE, pair comprising a first UE (550) and a second UE (560), and for each of the first UE (550) and the second UE (560) individually, wherein the method further comprising when the first UE (550) and the second UE (560) are initially unpaired:
   - scheduling (420) the first UE (550) in pair with the second UE (560) when the estimated throughput gain for the UE pair is above a first threshold, and when the estimated throughput gain is positive for each of the first UE (550) and the second UE (560),

   and wherein the method further comprising when the first UE (550) is initially paired with the second UE (560):

   - scheduling (430) the first UE (550) de-paired from the second UE (560) when the estimated throughput gain for the UE pair is lower than a second threshold, or when the estimated throughput gain is negative for either the first UE (550) or the second UE (560);
   - estimating (440) a further throughput gain of a paired scheduling for a UE pair comprising the first UE (550) and a third UE relative to the UE pair comprising the first UE (550) and the second UE (560); and
   - scheduling (450) the first UE (550) in pair with the third UE when the further throughput gain is higher than a third threshold.

2. The method according to claim 1, further comprising:

   - applying an attack-decay filter, when estimating (410) the throughput gain of the paired scheduling relative to the unpaired scheduling for the UE pair comprising the first UE (550) and the second UE (560), when estimating (410) the throughput gain for the first UE (550), and when estimating (410) the throughput gain for the second UE (560).

3. The method according to any of the preceding claims, wherein the scheduling (420, 450) of the first UE (550) in pair with the second UE (560) or the third UE further comprises:

   - predicting (460) a signal to noise and interference value for each of the first UE (550), and the second UE (560) or the third UE as paired; and
   - using (470) the predicted signal to noise and interference values when performing link adaptation for the first UE (550), and the second UE (560) or the third UE.

4. The method according to any of the preceding claims, wherein the scheduling (430) of the first UE (550) de-paired from the second UE (560) further comprises:

- predicting a signal to noise and interference value for each of the first UE (550) and the second UE (560) as de-paired; and
- using the predicted signal to noise and interference values of each of the first UE (550) and the second UE (560) as de-paired, when performing link adaptation for the first UE (550) and the second UE (560).

5. The method according to any of the preceding claims, further comprising:

- transmitting (480) an indication to the first UE (550) to use a power adaptation parameter for uplink transmission power control, wherein the power adaptation parameter enables the first UE (550) to adapt an uplink transmission power to an interference change due to pairing or de-pairing with the second UE (560).

6. The method according to claim 5, further comprising transmitting the power adaptation parameter to the first UE (550) before transmitting (480) the indication.

7. The method according to claim 5, wherein transmitting (480) the indication comprises transmitting the power adaptation parameter to the first UE (550).

8. The method according to any of claims 5-7, wherein the power adaptation parameter comprises a positive power step size for the uplink transmission power control when the first UE (550) is scheduled in pair with the second UE (560), and a negative power step size for the uplink transmission power control when the first UE (550) is scheduled de-paired from the second UE (560).

9. The method according to any of claims 5-7, wherein the power adaptation parameter comprises a first transmission power offset for the uplink transmission power control when the first UE (550) is scheduled in pair with the second UE (560), and a second transmission power offset for the uplink transmission power control when the first UE (550) is scheduled de-paired from the second UE (560).

10. A radio base station (500) of a wireless network, configured for Multiple User Multiple-Input-Multiple-Output scheduling, the radio base station (500) comprising a processing circuit (501), which is configured to:

- estimate a throughput gain of a paired scheduling relative to an unpaired scheduling for a User Equipment, UE, pair comprising a first UE (550) and a second UE (560), and for each of the first UE (550) and the second UE (560) individually,
- schedule the first UE (550) in pair with the second UE (560) when the estimated throughput gain for the UE pair is above a first threshold, and when the estimated throughput gain is positive for each of the first UE (550) and the second UE (560),
- schedule the first UE (550) de-paired from the second UE (560) when the estimated throughput gain for the UE pair is lower than a second threshold, or when the estimated throughput gain is negative for either the first UE (550) or the second UE (560);
- estimate a further throughput gain for a paired scheduling for a UE pair comprising the first UE (550) and a third UE relative to the UE pair comprising the first UE (550) and the second UE (560); and
- schedule the first UE (550) in pair with the third UE when the further throughput gain is higher than a third threshold.

11. The radio base station (500) according to claim 10, wherein the processing circuit (501) is further configured to apply an attack-decay filter, when estimating the throughput gain of the paired scheduling relative to the unpaired scheduling for the UE pair comprising the first UE (550) and the second UE (560), when estimating the throughput gain for the first UE (550), and when estimating the throughput gain for the second UE (560).

12. The radio base station (500) according to any of claims 10-11, wherein the processing circuit (501) is further configured to:

- predict a signal to noise and interference value for each of the first UE (550), and the second UE (560) or the third UE as paired or de-paired; and
- use the predicted signal to noise and interference values when the processing circuit performs link adaptation for the first UE (550), and the second UE (560) or the third UE.

13. The radio base station (500) according to any of claims 10-12, further comprising a transmitter (502) configured to transmit an indication to the first UE (550) to use a power adaptation parameter for uplink transmission power control, wherein the power adaptation parameter enables the first UE (550) to adapt an uplink transmission power to an interference change due to pairing or de-pairing with the second UE (560), and wherein the transmitter (502) is further configured to transmit the power adaptation parameter to the first UE (550) before transmitting the indication.

14. The radio base station (500) according to claim 13, wherein the power adaptation parameter comprises a positive power step size for the uplink transmission power control when the first UE (550) is scheduled in pair with the second UE (560), and a negative power step size for the uplink transmission power control when the first UE (550) is scheduled de-paired from the second UE (560).

15. The radio base station (500) according to claim 13, wherein the power adaptation parameter comprises a first transmission power offset for the uplink transmission power control when the first UE (550) is scheduled in pair with the second UE (560), and a second transmission power offset for the uplink transmission power control when the first UE (550) is scheduled de-paired from the second UE (560).

**Patentansprüche**

1. Verfahren in einer Funkbasisstation (500) eines drahtlosen Netzwerks, für die Multiple-Input-Multiple-Output-Planung für mehrere Benutzer, wobei das Verfahren Folgendes umfasst:

- Schätzen (410) einer Durchsatzzunahme einer gepaarten Planung relativ zu einer ungepaarten Planung für ein Paar an Benutzergeräten, UE, umfassend ein erstes UE (550) und ein zweites UE (560), und für jedes von dem ersten UE (550) und dem zweiten UE (560) individuell,

wobei das Verfahren ferner Folgendes umfasst, wenn das erste UE (550) und das zweite UE (560) anfangs ungepaart sind:

- Planen (420) des ersten UE (550) als Paar mit dem zweiten UE (560), wenn die geschätzte Durchsatzzunahme für das UE-Paar über einem ersten Schwellenwert liegt, und wenn die geschätzte Durchsatzzunahme für jedes von dem ersten UE (550) und dem zweiten UE (560) positiv ist,

und wobei das Verfahren ferner Folgendes umfasst, wenn das erste UE (550) anfangs mit dem zweiten UE (560) gepaart ist:

- Planen (430) des ersten UE (550) getrennt von dem zweiten UE (560), wenn die geschätzte Durchsatzzunahme für das UE-Paar niedriger als ein zweiter Schwellenwert ist, oder wenn die geschätzte Durchsatzzunahme entweder für das erste UE (550) oder das zweite UE (560) negativ ist;
- Schätzen (440) einer weiteren Durchsatzzunahme einer gepaarten Planung für ein UE-Paar, umfassend das erste UE (550) und ein drittes UE relativ zu dem UE-Paar, das das erste UE (550) und das zweite UE (560) umfasst; und
- Planen (450) des ersten UE (550) als Paar mit dem dritten UE, wenn die weitere Durchsatzzunahme höher als ein dritter Schwellenwert ist.

2. Verfahren nach Anspruch 1, ferner umfassend:

- Anwenden eines Attack-Decay-Filters beim Schätzen (410) der Durchsatzzunahme der gepaarten Planung relativ zu der ungepaarten Planung für das UE-Paar, das das erste UE (550) und das zweite UE (560) umfasst, beim Schätzen (410) der Durchsatzzunahme für das erste UE (550) und beim Schätzen (410) der Durchsatzzunahme für das zweite UE (560) .

3. Verfahren nach einem der vorhergehenden Ansprüche, wobei das Planen (420, 450) des ersten UE (550) als Paar mit dem zweiten UE (560) oder dem dritten UE ferner Folgendes umfasst:

- Vorhersagen (460) eines Signal-zu-Rauschen-und-Interferenz-Wertes für jedes von dem ersten UE (550) und dem zweiten UE (560) oder dem dritten UE als Paar; und
- Verwenden (470) der vorhergesagten Signal-zu-Rauschen- und-Interferenz-Werte beim Durchführen der Linkadaptation für das erste UE (550) und das zweite UE (560) oder das dritte UE.

4. Verfahren nach einem der vorhergehenden Ansprüche, wobei das Planen (430) des ersten UE (550) getrennt von dem zweiten UE (560) ferner Folgendes umfasst:

- Vorhersagen eines Signal-zu-Rauschen-und-Interferenz-Wertes für jedes von dem ersten UE (550) und dem zweiten UE (560) getrennt; und
- Verwenden der vorhergesagten Signal-zu-Rauschen-und-Interferenz-Werte von jedem von dem ersten UE (550) und dem zweiten UE (560) getrennt beim Durchführen der Linkadaptation für das erste UE (550) und das zweite UE (560) .

5. Verfahren nach einem der vorhergehenden Ansprüche, ferner umfassend:

- Übertragen (480) einer Angabe an das erste UE (550) zur Verwendung eines Leistungsadaptationsparameters für die Uplink-Übertragungsleistungssteuerung, wobei der Leistungsadaptationsparameter dem ersten UE (550) ermöglicht, eine Uplink-Übertragungsleistung an eine Interferenzänderung aufgrund der Paarung mit oder Trennung von dem zweiten UE (560) anzupassen.

6. Verfahren nach Anspruch 5, ferner umfassend das Übertragen des Leistungsadaptationsparameters an das erste UE (550) vor dem Übertragen (480) der Angabe.

7. Verfahren nach Anspruch 5, wobei das Übertragen (480) der Angabe das Übertragen des Leistungsadaptationsparameters an das erste UE (550) umfasst.

8. Verfahren nach einem der Ansprüche 5-7, wobei der Leistungsadaptationsparameter eine positive Leistungsschrittgröße für die Uplink-Übertragungsleistungssteuerung, wenn das erste UE (550) als Paar mit dem zweiten UE (560) geplant ist, und eine negative Leistungsschrittgröße für die Uplink-Übertragungsleistungssteuerung, wenn das erste UE (550) getrennt von dem zweiten UE (560) geplant ist, umfasst.

9. Verfahren nach einem der Ansprüche 5-7, wobei der Leistungsadaptationsparameter einen ersten Übertragungsleistungsversatz für die Uplink-Übertragungsleistungssteuerung, wenn das erste UE (550) als Paar mit dem zweiten UE (560) geplant ist, und einen zweiten Übertragungsleistungsversatz für die Uplink-Übertragungsleistungssteuerung, wenn das erste UE (550) getrennt von dem zweiten UE (560) geplant ist, umfasst.

10. Funkbasisstation (500) eines drahtlosen Netzwerks, die für die Multiple-Input-Multiple-Output-Planung für mehrere Benutzer konfiguriert ist, wobei die Funkbasisstation (500) eine Verarbeitungsschaltung (501) umfasst, die für Folgendes konfiguriert ist:

- Schätzen einer Durchsatzzunahme einer gepaarten Planung relativ zu einer ungepaarten Planung für ein Paar an Benutzergeräten, UE, umfassend ein erstes UE (550) und ein zweites UE (560), und für jedes von dem ersten UE (550) und dem zweiten UE (560) individuell,
- Planen des ersten UE (550) als Paar mit dem zweiten UE (560), wenn die geschätzte Durchsatzzunahme für das UE-Paar über einem ersten Schwellenwert liegt, und wenn die geschätzte Durchsatzzunahme für jedes von dem ersten UE (550) und dem zweiten UE (560) positiv ist,
- Planen des ersten UE (550) getrennt von dem zweiten UE (560), wenn die geschätzte Durchsatzzunahme für das UE-Paar niedriger als ein zweiter Schwellenwert ist, oder wenn die geschätzte Durchsatzzunahme entweder für das erste UE (550) oder das zweite UE (560) negativ ist;
- Schätzen einer weiteren Durchsatzzunahme für eine gepaarte Planung für ein UE-Paar, umfassend das erste UE (550) und ein drittes UE relativ zu dem UE-Paar, das das erste UE (550) und das zweite UE (560) umfasst; und
- Planen des ersten UE (550) als Paar mit dem dritten UE, wenn die weitere Durchsatzzunahme höher als ein dritter Schwellenwert ist.

11. Funkbasisstation (500) nach Anspruch 10, wobei die Verarbeitungsschaltung (501) ferner konfiguriert ist, um einen Attack-Decay-Filter beim Schätzen der Durchsatzzunahme der gepaarten Planung relativ zu der ungepaarten Planung für das UE-Paar, das das erste UE (550) und das zweite UE (560) umfasst, beim Schätzen der Durchsatzzunahme für das erste UE (550) und beim Schätzen der Durchsatzzunahme für das zweite UE (560) anzuwenden.

12. Funkbasisstation (500) nach einem der Ansprüche 10-11, wobei die Verarbeitungsschaltung (501) ferner für Folgendes konfiguriert ist:

- Vorhersagen eines Signal-zu-Rauschen-und-Interferenz-Wertes für jedes von dem ersten UE (550) und dem zweiten UE (560) oder dem dritten UE als Paar oder getrennt; und
- Verwenden der vorhergesagten Signal-zu-Rauschen-und-Interferenz-Werte, wenn die Verarbeitungsschaltung Linkadaptation für das erste UE (550) und das zweite UE (560) oder das dritte UE durchführt.

13. Funkbasisstation (500) nach einem der Ansprüche 10-12, ferner umfassend einen Sender (502), der konfiguriert ist, um eine Angabe an das erste UE (550) zur Verwendung eines Leistungsadaptationsparameters für die Uplink-Übertragungsleistungssteuerung zu übertragen, wobei der Leistungsadaptationsparameter dem ersten UE (550) ermöglicht, eine Uplink-Übertragungsleistung an eine Interferenzänderung aufgrund der Paarung mit oder Trennung von dem zweiten UE (560) anzupassen, und wobei der Sender (502) ferner konfiguriert ist, um den Leistungsadaptationsparameter an das erste UE (550) vor dem Übertragen der Angabe zu übertragen.

14. Funkbasisstation (500) nach Anspruch 13, wobei der Leistungsadaptationsparameter eine positive Leistungsschrittgröße für die Uplink-Übertragungsleistungssteuerung, wenn das erste UE (550) als Paar mit dem zweiten UE (560) geplant ist, und eine negative Leistungsschrittgröße für die Uplink-Übertragungsleistungssteuerung, wenn das erste UE (550) getrennt von dem zweiten UE (560) geplant ist, umfasst.

15. Funkbasisstation (500) nach Anspruch 13, wobei der Leistungsadaptationsparameter einen ersten Übertragungsleistungsversatz für die Uplink-Übertragungsleistungssteuerung, wenn das erste UE (550) als Paar mit dem zweiten UE (560) geplant ist, und einen zweiten Übertragungsleistungsversatz für die Uplink-Übertragungsleistungssteuerung, wenn das erste UE (550) getrennt von dem zweiten UE (560) geplant ist, umfasst.

**Revendications**

1. Procédé dans une station de base radio (500) d'un réseau sans fil, pour un ordonnancement entrée multiple sortie multiple multiutilisateur, le procédé comprenant :

- l'estimation (410) d'un gain de débit d'un ordonnancement apparié relativement à un ordonnancement non apparié pour une paire d'équipements d'utilisateur, UE, comprenant un premier UE (550) et un second UE (560), et individuellement pour chacun du premier UE (550) et du second UE (560),

dans lequel le procédé comprenant en outre lorsque le premier UE (550) et le second UE (560) sont initialement non appariés :

- l'ordonnancement (420) du premier UE (550) en paire avec le second UE (560) lorsque le gain de débit estimé pour la paire d'UE est au-dessus d'un premier seuil et lorsque le gain de débit estimé est positif pour chacun du premier UE (550) et du second UE (560),

et dans lequel le procédé comprenant en outre lorsque le premier UE (550) est initialement apparié avec le second UE (560) :

- l'ordonnancement (430) du premier UE (550) désapparié du second UE (560) lorsque le gain de débit estimé pour la paire d'UE est inférieur à un deuxième seuil, ou lorsque le gain de débit estimé est négatif pour soit le premier UE (550), soit le second UE (560) ;
- l'estimation (440) d'un autre gain de débit d'un ordonnancement apparié pour une paire d'UE comprenant le premier UE (550) et un troisième UE relativement à la paire d'UE comprenant le premier UE (550) et le deuxième UE (560) ; et
- l'ordonnancement (450) du premier UE (550) en paire avec le troisième UE lorsque l'autre gain de débit est supérieur à un troisième seuil.

2. Procédé selon la revendication 1, comprenant en outre :

- l'application d'un filtre d'attaque-chute, lors de l'estimation (410) du gain de débit de l'ordonnancement apparié relativement à l'ordonnancement non apparié pour la paire d'UE comprenant le premier UE (550) et le deuxième UE (560), lors de l'estimation (410) du gain de débit pour le premier UE (550) et lors de l'estimation (410) du gain de débit pour le deuxième UE (560).

**3.** Procédé selon l'une quelconque des revendications précédentes, dans lequel l'ordonnancement (420, 450) du premier UE (550) en paire avec le deuxième UE (560) ou le troisième UE comprend en outre :

- la prédiction (460) d'une valeur de signal sur bruit plus interférences pour chacun du premier UE (550) et du deuxième UE (560) ou du troisième UE en tant qu'appariés ; et
- l'utilisation (470) des valeurs prédites de signal sur bruit plus interférences lors de la réalisation d'une adaptation de liaison pour le premier UE (550) et le deuxième UE (560) ou le troisième UE.

**4.** Procédé selon l'une quelconque des revendications précédentes, dans lequel l'ordonnancement (430) du premier UE (550) désapparié du deuxième UE (560) comprend en outre :

- la prédiction d'une valeur de signal sur bruit plus interférences pour chacun du premier UE (550) et du deuxième UE (560) en tant que désappariés ; et
- l'utilisation des valeurs prédites de signal sur bruit plus interférences de chacun du premier UE (550) et du deuxième UE (560) en tant que désapparié, lors de la réalisation d'une adaptation de liaison pour le premier UE (550) et le deuxième UE (560) .

**5.** Procédé selon l'une quelconque des revendications précédentes, comprenant en outre :

- l'émission (480) d'une indication vers le premier UE (550) pour utiliser un paramètre d'adaptation de puissance pour une commande de puissance d'émission en liaison montante, dans lequel le paramètre d'adaptation de puissance permet au premier UE (550) d'adapter une puissance d'émission en liaison montante à un changement d'interférences en raison d'un appariement avec le deuxième UE (560) ou d'un désappariement de ce dernier.

**6.** Procédé selon la revendication 5, comprenant en outre l'émission du paramètre d'adaptation de puissance vers le premier UE (550) avant l'émission (480) de l'indication.

**7.** Procédé selon la revendication 5, dans lequel l'émission (480) de l'indication comprend l'émission du paramètre d'adaptation de puissance vers le premier UE (550).

**8.** Procédé selon l'une quelconque des revendications 5 à 7, dans lequel le paramètre d'adaptation de puissance comprend une taille de pas de puissance positive pour la commande de puissance d'émission en liaison montante lorsque le premier UE (550) est ordonnancé en paire avec le deuxième UE (560) et une taille de pas de puissance négative pour la commande de puissance d'émission en liaison montante lorsque le premier UE (550) est ordonnancé désapparié du deuxième UE (560).

**9.** Procédé selon l'une quelconque des revendications 5 à 7, dans lequel le paramètre d'adaptation de puissance comprend un premier décalage de puissance d'émission pour la commande de puissance d'émission en liaison montante lorsque le premier UE (550) est ordonnancé en paire avec le deuxième UE (560) et un second décalage de puissance d'émission pour la commande de puissance d'émission en liaison montante lorsque le premier UE (550) est ordonnancé désapparié du deuxième UE (560).

**10.** Station de base radio (500) d'un réseau sans fil, configuré pour un ordonnancement entrée multiple sortie multiple multiutilisateur, la station de base radio (500) comprenant un circuit de traitement (501) qui est configuré pour :

- estimer un gain de débit d'un ordonnancement apparié relativement à un ordonnancement non apparié pour une paire d'équipements d'utilisateur, UE, comprenant un premier UE (550) et un deuxième UE (560), et individuellement pour chacun du premier UE (550) et du deuxième UE (560),
- ordonnancer le premier UE (550) en paire avec le deuxième UE (560) lorsque le gain de débit estimé pour la paire d'UE est au-dessus d'un premier seuil, et lorsque le gain de débit estimé est positif pour chacun du premier UE (550) et du deuxième UE (560),
- ordonnancer le premier UE (550) désapparié du deuxième UE (560) lorsque le gain de débit estimé pour la paire d'UE est inférieur à un deuxième seuil, ou lorsque le gain de débit estimé est négatif pour soit le premier UE (550), soit le deuxième UE (560) ;
- estimer un autre gain de débit pour un ordonnancement apparié pour une paire d'UE comprenant le premier UE (550) et un troisième UE relativement à la paire d'UE comprenant le premier UE (550) et le deuxième UE (560) ; et
- ordonnancer le premier UE (550) en paire avec le troisième UE lorsque l'autre gain de débit est supérieur à un troisième seuil.

**11.** Station de base radio (500) selon la revendication 10, dans lequel le circuit de traitement (501) est en outre configuré pour appliquer un filtre d'attaque-chute, lors de l'estimation du gain de débit de l'ordonnancement apparié relativement à l'ordonnancement non apparié pour la paire d'UE comprenant le premier UE (550) et le deuxième UE (560), lors de l'estimation du gain de débit pour le premier UE (550) et lors de l'estimation du gain de débit pour le deuxième UE (560) .

**12.** Station de base radio (500) selon l'une quelconque des revendications 10 à 11, dans lequel le circuit de traitement (501) est en outre configuré pour :

- prédire une valeur de signal sur bruit plus interférences pour chacun du premier UE (550) et du deuxième UE (560) ou du troisième UE en tant qu'apparié ou désapparié ; et
- utiliser les valeurs prédites de signal sur bruit plus interférences lorsque le circuit de traitement réalise une adaptation de liaison pour le premier UE (550) et pour le deuxième UE (560) ou pour le troisième UE.

**13.** Station de base radio (500) selon l'une quelconque des revendications 10 à 12, comprenant en outre un émetteur (502) configuré pour émettre une indication vers le premier UE (550) pour utiliser un paramètre d'adaptation de puissance pour une commande de puissance d'émission en liaison montante, dans lequel le paramètre d'adaptation de puissance permet au premier UE (550) d'adapter une puissance d'émission en liaison montante à un changement d'interférences en raison d'un appariement avec le deuxième UE (560) ou d'un désappariement de ce dernier, et dans lequel l'émetteur (502) est en outre configuré pour émettre le paramètre d'adaptation de puissance vers le premier UE (550) avant l'émission de l'indication.

**14.** Station de base radio (500) selon la revendication 13, dans lequel le paramètre d'adaptation de puissance comprend une taille de pas de puissance positive pour la commande de puissance d'émission en liaison montante lorsque le premier UE (550) est ordonnancé en paire avec le deuxième UE (560) et une taille de pas de puissance négative pour la commande de puissance d'émission en liaison montante lorsque le premier UE (550) est ordonnancé désapparié du deuxième UE (560).

**15.** Station de base radio (500) selon la revendication 13, dans lequel le paramètre d'adaptation de puissance comprend un premier décalage de puissance d'émission pour la commande de puissance d'émission en liaison montante lorsque le premier UE (550) est ordonnancé en paire avec le deuxième UE (560) et un second décalage de puissance d'émission pour la commande de puissance d'émission en liaison montante lorsque le premier UE (550) est ordonnancé désapparié du deuxième UE (560).

Fig. 1

Fig. 2

Fig. 3

Estimate a throughput gain of a paired scheduling relative to an unpaired scheduling for UE pair and for individual UEs — 410

UE paired?

NO | YES

Schedule the first UE in pair with the second UE when the estimated throughput gain is above a first threshold, and when the estimated throughput gain is positive for each of the first and second UEs

420

Schedule the first UE de-paired from the second UE when the estimated throughput gain is lower than a second threshold, or when the estimated throughput gain is negative for either the first or the second UE — 430

## Fig. 4a

410

UE paired?

YES

430

Estimate a further throughput gain of a paired scheduling for a UE pair comprising the first UE and a third UE relative to a UE pair comprising the first UE and the second UE

440

Schedule the first UE in pair with the third UE when the further throughput gain is higher than a third threshold

450

# Fig. 4b

410

UE paired?    YES

430

Predict a SINR value for each of the first and the second UE as paired    460

Use the predicted SINR values when performing link adaptation for the first and second UE    470

Transmit an indication to the first UE to use a power adaptation parameter for uplink transmission power control enabling the first UE to adapt an uplink transmission power to an interference change due to pairing or de-pairing with the second UE    480

Fig. 4c

**550** 1st UE

**560** 2nd UE

508

**502** Transmitter

**501** Processing circuit

**500** RBS

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011055137 A1